# EUROPÄISCHE PATENTANMELDUNG

(11) **EP 1 134 122 A2**
(43) Veröffentlichungstag der Anmeldung: **19.09.2001**
(21) Anmeldenummer: 01105854.2
(22) Anmeldetag: 09.03.2001
(51) Int. Cl.: B60R 9/045, B60R 9/06

(54) **Trägervorrichtung für ein Fahrzeugheck eines Kraftfahrzeugs**

(30) Priorität: 17.03.2000 DE 10013049
(71) Anmelder: Webasto Vehicle Systems International GmbH, 82131 Stockdorf (DE)
(72) Erfinder: De Gaillard, Francois, 85390 Mouilleron en pareds (FR)
(74) Vertreter: Konnerth, Dieter Hans

(57) **Zusammenfassung**

Die Erfindung betrifft eine Trägervorrichtung für ein Fahrzeugheck eines Kraftfahrzeugs, wobei die im wesentlichen in Fahrzeuglängsrichtung ausgerichtete Trägervorrichtung (6) in Ruhestellung in der Oberseite (8) des Kofferraumdeckels (4) versenkt angeordnet ist und mittels einer Ausstelleinrichtung (16) aus dem Kofferraumdeckel (4) heraus in eine Gebrauchsstellung anhebbar ist. Das eine Ende (10) der Trägervorrichtung (6) kann an einem Schwenk-Ausstellhebel (11) schwenkbar gelagert sein und die Trägervorrichtung (6) kann durch die am anderen Ende (15) der Trägervorrichtung (6) angreifende Ausstelleinrichtung (16) aus dem Kofferraumdeckel (4) anhebbar sein.

## Beschreibung

Die Erfindung betrifft eine Trägervorrichtung für ein Fahrzeugheck eines Kraftfahrzeugs.

In der EP 0 933 258 A2 ist ein Dachgepäckträger offenbart, der zwei Längsträger aufweist, die benachbart von Längsseiten des Fahrzeugdaches angeordnet sind. Die Längsträger sind beidendig mit Endstücken versehen, die in dachfesten Aufnahmen gelagert sind. Die Endstücke sind mit den Längsträgern lösbar verbunden und können durch Umstecken an den Längsträgern in zwei unterschiedlichen Positionen festgelegt werden, die einer abgesenkten Stellung der Längsträger bzw. einer angehobenen Gebrauchsstellung der Längsträger entsprechen.

Aus der DE 37 11 386 A1 ist ein Heckspoiler eines Fahrzeugs bekannt geworden, dessen Luftleitprofil gegenüber der Fahrzeugkarosserie zwischen einer eingefahrenen Stellung und einer ausgefahrenen Stellung verstellbar ist. Das Luftleitprofil ist von mindestens einem mit ihm starr verbundenen kreisbogenförmigen Aussteller getragen, der in einem entsprechend kreisbogenförmigen Führungskanal eines an der Karosserie angeordneten Führungsblocks verschiebbar geführt ist. Der kreisbogenförmige Aussteller bewegt sich beim Ausstellen des Luftleitprofils in dem nach hinten zum Fahrzeugheck hin ansteigenden Führungskanal und aus ihm heraus.

Aufgabe der Erfindung ist es, eine gattungsgemäße Trägervorrichtung zu schaffen, die bezüglich ihrer Anordnung und Funktionalität verbessert ist.

Diese Aufgabe wird bei der eingangs genannte Trägervorrichtung erfindungsgemäß dadurch gelöst, daß die im wesentlichen in Fahrzeuglängsrichtung ausgerichtete Trägervorrichtung in Ruhestellung in der Oberseite des Kofferraumdekkels versenkt angeordnet ist und mittels einer Ausstelleinrichtung aus dem Kofferraumdeckel heraus in eine Gebrauchsstellung anhebbar ist. Die Trägervorrichtung, die somit in ständiger Bereitschaft für eine Nutzung am Fahrzeug bereitgehalten ist, ohne daß sie einen zusätzlichen Stauraum im Inneren des Fahrzeugs benötigen würde, schließt in ihrer Ruhestellung insbesondere bündig mit der angrenzenden Oberfläche des Kofferraumdeckels ab und ist bei ihrer Nichtbenutzung ohne strömungstechnisch nachteilige Auswirkungen. Zusätzlich ist das optische Erscheinungsbild des Fahrzeugs bei Nichtbenutzung gewahrt. Zum Überführen in eine Gebrauchsstellung wird die Trägervorrichtung lediglich angehoben oder ausgefahren, bis sie oberhalb der Oberfläche des Kofferraumdeckels und in erforderlichem Maß zu diesem beabstandet angeordnet ist.

Vorteilhafte Ausgestaltungen der Erfindung sind in den Unteransprüchen angegeben.

In einer bevorzugten Ausgestaltung ist das eine Ende der Trägervorrichtung an einem Schwenk-Ausstellhebel schwenkbar gelagert und die Trägervorrichtung ist durch die an ihrem anderen Ende angreifende Ausstelleinrichtung aus dem Kofferraumdeckel anhebbar. Durch den gebildeten Hebelmechanismus wird das dem Schwenk-Ausstellhebel zugeordnete Ende der Trägervorrichtung auf einer Kreisbahn entsprechend dem Schwenkwinkel des Schwenk-Ausstellhebels und dessen Länge in eine bestimmte Höhenlage über den Kofferraumdeckel gebracht.

Das Anheben oder Ausfahren der Trägervorrichtung kann dadurch erfolgen, daß die Ausstelleinrichtung durch Verkürzen des Abstandes zwischen dem Angriffspunkt der Ausstelleinrichtung an der Trägervorrichtung und dem Lager des Schwenk-Ausstellhebels an dem Kofferraumdeckel unter Anhebung des Angriffspunkts die Trägervorrichtung anhebt.

Zweckmäßigerweise enthält die Trägervorrichtung zwei im wesentlichen in Fahrzeuglängsrichtung angeordnete, voneinander beabstandete und durch die Ausstelleinrichtung anhebbare Trägerleisten zum Anbringen einer Last. Für größere Lasten können beispielsweise auch drei Trägerleisten vorgesehen sein. Für kleinere Lasten kann auch nur eine zentrale Trägerleiste in der Mitte des Kofferraumdeckels vorgesehen sein, die z. B. seitliche Erweiterungen zur Lastabstützung aufweist, welche in der Ruhestellung in entsprechenden Vertiefungen an der Oberfläche des Kofferraumdeckels aufgenommen sind.

Bevorzugt ist die Ausstelleinrichtung im wesentlichen innen am Kofferraumdeckel angeordnet und über die Oberfläche des Kofferraumdeckels hinaus ausfahrbar.

Zweckmäßigerweise sind die Trägerleisten von den seitlichen Rändern des Kofferraumdeckels beabstandet angeordnet.

Gemäß einem Ausführungsbeispiel ist vorgesehen, daß das Vorderende der Trägervorrichtung bzw. der Trägerleisten mit dem Schwenk-Ausstellhebel und das Hinterende mit dem angetriebenen Ausstellelement gekoppelt ist.

Bei einer Variante, bei der das bzw. die Hinterenden der Trägervorrichtung bzw. der Trägerleisten beim Ausstellen auf einer ansteigenden, nach vorne gerichteten Bewegungsbahn geführt sind, kann die Bewegungsbahn sowohl linear wie auch entlang einer Kurvenbahn verlaufen. Ein solcher Bahnabschnitt liegt insbesondere auf einem Kreis.

Das Ausstellelement kann auch ein Ausstellhebel sein, der einerseits mit der Trägerleiste gelenkig verbunden ist und andererseits an einer Linearführung verschiebbar geführt und schwenkbar gelagert ist.

Zweckmäßigerweise enthält die Ausstelleinrichtung ein an einer Bewegungsbahnkurve verschiebbar geführtes Ausstellelement. Dieses Ausstellelement kann dementsprechend sowohl in einem linearen wie auch in einem gekrümmten Führungskanal verschiebbar aufgenommen sein. Alternativ ist das Ausstellelement ein gebogener Stab oder dergleichen, der in dem rohrförmigen Führungskanal verschiebbar aufgenommen ist. Der rohrförmige Führungskanal kann unterhalb der Oberseite des Kofferraumdeckels angeordnet sein und das durch die Oberseite des Kofferraumdeckels hinausreichende Ausstellelement kann mittels einer Ringdichtung gegenüber dem Kofferraumdeckel abgedichtet sein.

Wenn die Ausstelleinrichtung und der Antrieb an einer Verstärkungsstruktur des Kofferraumdeckels gelagert sind, kann der restliche Kofferraumdeckel leicht gebaut werden, da er keine Tragfunktion erfüllen muß.

Das Überführen der Trägervorrichtung aus der Ruhestellung in die angehobene Gebrauchsstellung kann manuell z. B. über einen Schiebemechanismus erfolgen. Andererseits kann die Ausstelleinrichtung bzw. das Ausstellelement von einem Antrieb antreibbar sein, der z. B. ein Elektromotor ist, der mittels Seil- oder Kabelverbindung mit der Trägervorrichtung bzw. den beiden Trägerleisten verbunden ist.

Nachfolgend wird ein Ausführungsbeispiel der Trägervorrichtung unter Bezugnahme auf Zeichnungen näher erläutert. Es zeigt:
- Fig. 1: in einer Schnittansicht in Fahrzeuglängsrichtung eine erfindungsgemäße Trägervorrichtung mit einer Ausstelleinrichtung an einem Kofferraumdeckel;
- Fig. 2: in einer Schrägansicht die Trägervorrichtung mit der Ausstelleinrichtung;

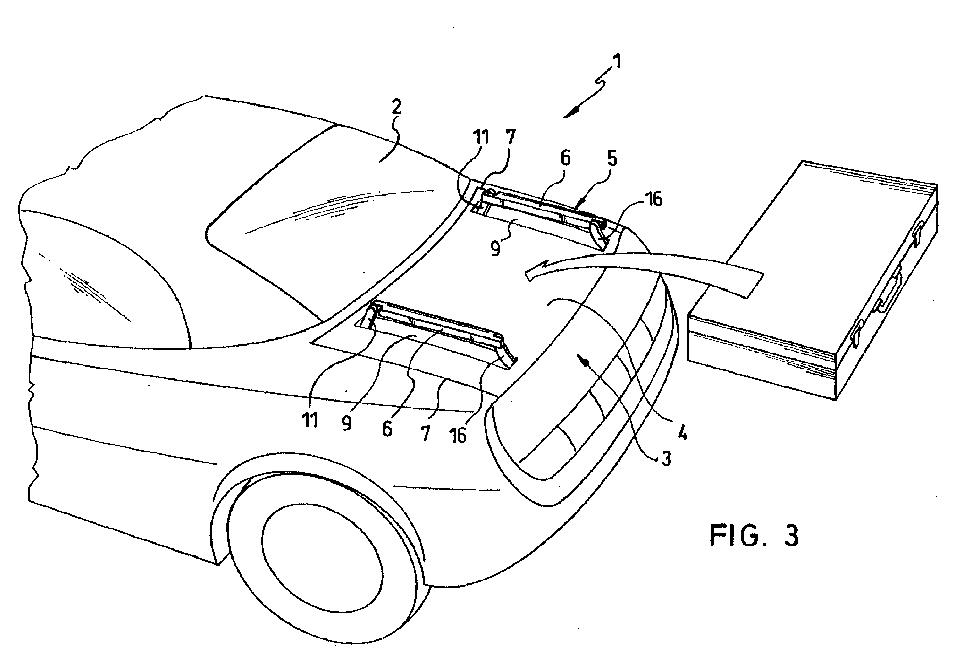

- Fig. 3: in einer Draufsicht ein Fahrzeugheck mit aus dem Kofferraumdeckel angehobener Trägervorrichtung;

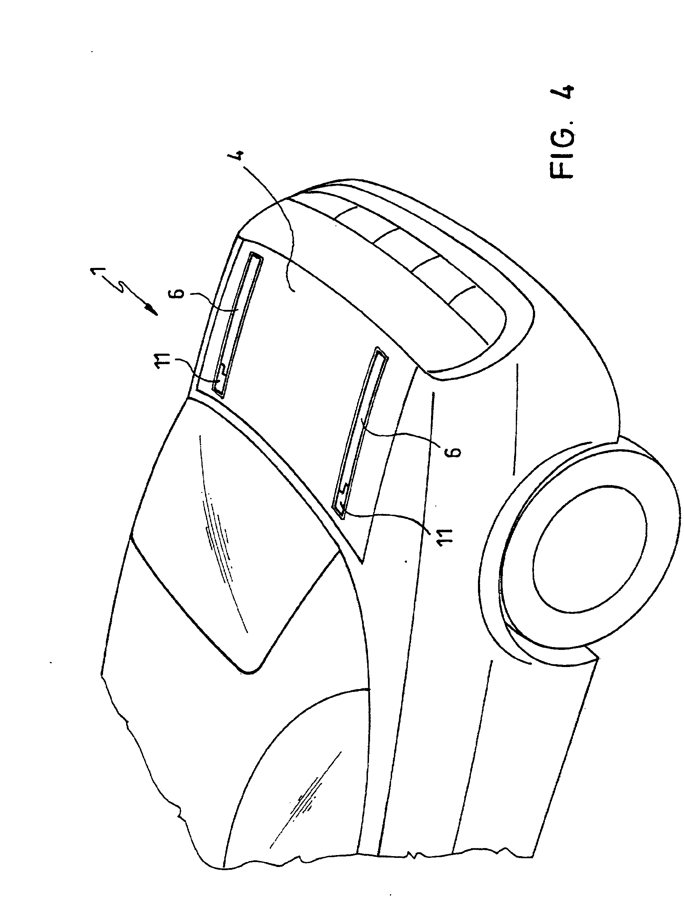

- Fig. 4: in einer Draufsicht gemäß Fig. 3 das Fahrzeugheck mit in den Kofferraumdeckel abgesenkter Trägervorrichtung; und
- Fig. 5: in seitlicher Draufsicht in schematischer Darstellung ein weiteres Ausführungsbeispiel einer Ausstelleinrichtung für die Trägervorrichtung.

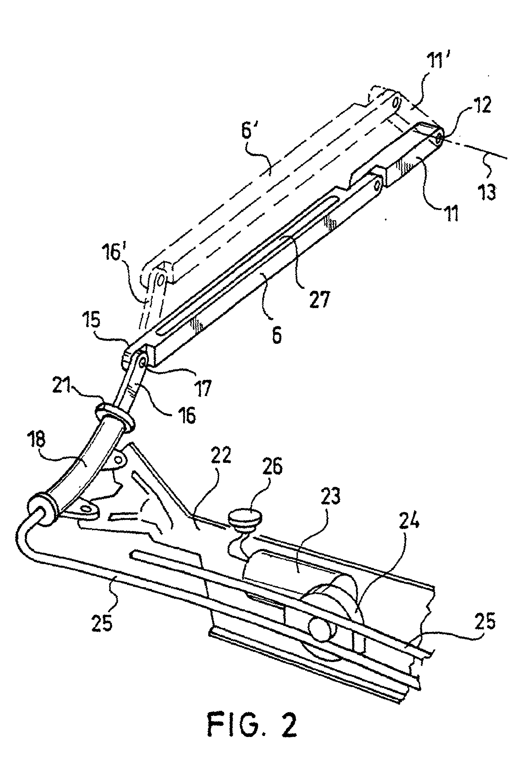

Ein Kraftfahrzeug 1 enthält in seinem Heckbereich hinter der Heckscheibe 2 einen Kofferraum 3 mit einem Kofferraumdeckel 4, in den eine Trägervorrichtung 5 für Lasten wie z. B. für Koffer oder für Fahrräder integriert ist. Die Trägervorrichtung 5 enthält zwei voneinander beabstandete, in etwa in Fahrzeuglängsrichtung ausgerichtete Trägerleisten 6, die von dem jeweiligen seitlichen Rand 7 des Kofferraumdeckels 4 beabstandet sind. Jede Trägerleiste 6 ist in der Ruhe- oder Außergebrauchsstellung der Trägervorrichtung in einer in der Oberseite oder Oberfläche 8 des Kofferraumdeckels 4 ausgebildeten Vertiefung 9 in etwa bündig mit der Oberfläche 8 angeordnet. Das Vorderende 10 der Trägerleiste 6 ist mit einem Schwenk-Ausstellhebel 11 schwenkbar verbunden, der sich in Längsrichtung der Trägerleiste 6 erstreckt und in einem an dem Kofferraumdeckel 4 angebrachten Lager 12 um eine Querachse 13 (siehe Fig. 2) aus der Vertiefung 9 heraus schwenkbar gelagert ist. An der Innenseite des Kofferraumdeckels 4 ist eine Verstärkungsstruktur wie z. B. ein Verstärkungsblech 14 angebracht, das sich quer über die Innenseite des Kofferraumdeckels 4 erstreckt und eine Verstärkung für die beiden Lager 12 der rechten und der linken Trägerleiste 6 bildet.

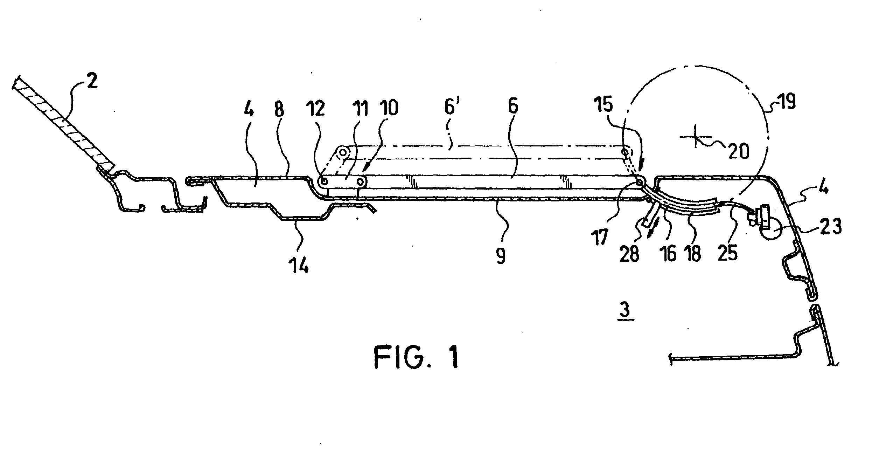

Das Hinterende 15 jeder Trägerleiste 6 ist jeweils mit einem Ausstellelement 16 einer Ausstelleinrichtung in einem Gelenk 17 gelenkig verbunden, wobei das Ausstellelement 16 als Abschnitt eines Kreisbogens gebildet ist und in einem entsprechend geformten kreisbogenförmigen Führungskanal 18 der Ausstelleinrichtung verschiebbar aufgenommen ist. Der sich zu der Vertiefung 9 in der Oberfläche 8 des Kofferraumdeckels 4 öffnende Führungskanal 18 folgt dem linken unteren Abschnitt eines gedachten Kreises 19 (siehe Fig. 1), dessen Kreismittelpunkt 20 bezüglich der Fahrzeuglängsachse hinter und über dem Gelenk 17 liegt, und ist gegenüber der Oberfläche 8 des Kofferraumdeckels 4 mit einer Ringdichtung 21 abgedichtet, die auch das gegenüber dem Führungskanal 18 verschiebbare Ausstellelement 16 abdichtend umgibt.

Der Führungskanal 18 ist an einer Stützstruktur 22 des Kofferraumdeckels 4 befestigt, die sich innen am Hinterende des Kofferraumdeckels 4 quer über diesen erstreckt. An der Stützstruktur 22 ist des weiteren ein elektrischer Antriebsmotor 23 mit einem Getriebe 24 angebracht, der jeweils über ein in einem Führungsrohr verschiebbar aufgenommenes, zug- und drucksteifes Antriebskabel 25 mit dem jeweiligen Ausstellelement 16 verbunden ist. Eine Betätigung des Antriebsmotors 23 erfolgt z. B. über einen Schalter oder Taster 26, der innen oder außen am Kofferraumdeckel 4 angebracht ist und, falls er von außen zugänglich ist, nach Entriegelung mittels eines Schlüssels bedienbar ist.

Zum Ausfahren oder Anheben der beiden Trägerleisten 6 wird der elektrische Antrieb 23 betätigt, der über das Antriebskabel 25 das Ausstellelement 16 aus dem Führungskanal 18 ausfährt. Dabei wird das Gelenk 17 und gleichzeitig das Hinterende 15 der Trägerleiste 6 auf der gedachten Kreislinie 19 nach vorne und gleichzeitig aufwärts bewegt, bis die strichliert dargestellte ausgefahrene und angehobene Arbeitsstellung der Trägerleiste 6 erreicht ist (Trägerleiste 6', Schwenk-Ausstellhebel 11' und Ausstellelement 16'). Die Arbeitsstellung wird durch das zwangsweise Verschwenken des Schwenk-Ausstellhebels 11 aufgrund der Vorwärtsbewegung des Gelenks 17 und damit der Trägerleiste 6 erreicht. Um eine Aufwärts-Schwenkbewegung des Schwenk-Ausstellhebels 11 aufgrund der auf die Trägerleiste 6 einwirkenden Längsbewegungskomponente zu erreichen, ist die Längsachse des Schwenk-Ausstellhebels 11 in Ruhestellung gegenüber der Längsachse der Trägerleiste 6 zur Vermeidung einer Totpunktstellung unter einem geringen Winkel angestellt. Alternativ kann ein Gelenkzapfen der Trägerleiste 6 in einer kurzen ansteigenden Gelenkführung am Schwenk-Ausstellhebel 11 angeordnet sein, die die Aufwärts-Schwenkbewegung des Schwenk-Ausstellhebels 11 einleitet.

Mittels einer Blockiereinrichtung 28 zum lösbaren Blockieren durch Einrasten, Sperren oder Klemmen kann das Ausstellelement 16 in der ausgefahrenen, angehobenen Arbeitsstellung mechanisch blockiert werden, um bei an den Trägerleisten 6 angebrachter Last eine Rückwirkung zu dem Antriebsmotor zu verhindern und diesen vor mechanischer Beschädigung durch ständige Belastung zu schützen.

In umgekehrtem Bewegungsablauf erfolgt das Absenken der Trägerleisten in die Ruhestellung bei in den Kofferraumdeckel 4 versenkter Anordnung.

Zur Erhöhung der Stabilität und der Verbesserung der Anbringungsmöglichkeiten für Lasten können die beiden Trägerleisten 6 durch eine oder mehrere Querstreben miteinander verbunden sein, die in Ruhestellung in entsprechenden Vertiefungen in der Oberfläche 8 des Kofferraumdeckels 4 aufgenommen sind. Die Ausstelleinrichtung kann die Trägervorrichtung dann auch über lediglich ein zentrales Ausstellelement anheben und absenken.

Die Trägerleisten 6 können Befestigungseinrichtungen für Lasten wie z. B. ein Langloch 27 (siehe Fig. 2), einzelne Bohrungen oder Öffnungen oder auch Rastoder Klemmeinrichtungen für Befestigungsmittel aufweisen. Selbstverständlich kann der Schwenk-Ausstellhebel 11 am Hinterende 15 der Trägerleisten 6 angebracht sein und der Antrieb mit dem Ausstellhebel 16 kann mit dem Vorderende 10 der Trägerleiste 6 gekoppelt sein.

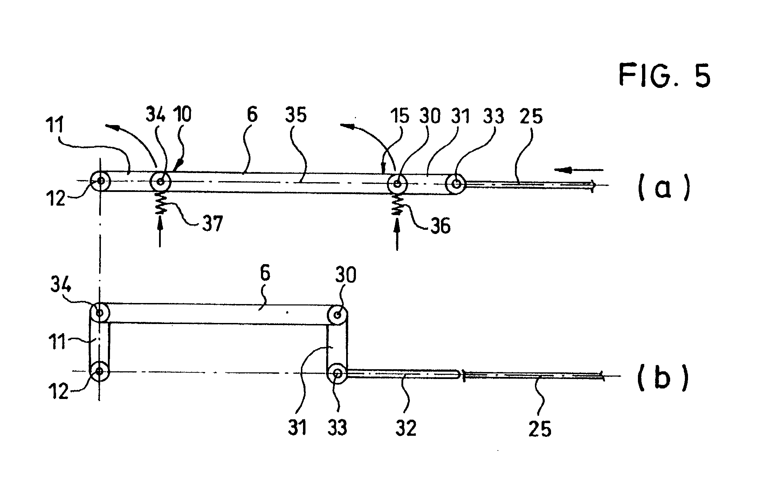

Fig. 5a und b zeigen ein weiteres Ausführungsbeispiel der Ausstelleinrichtung für die Trägerleisten 6. Das Vorderende 10 der Trägerleiste 6 ist in schon beschriebener Weise mittels des Schwenk-Ausstellhebels 11 und des Lagers 12 schwenkbar an dem Kofferraumdeckel 4 angebracht. Am Hinterende 15 der Trägerleiste 6 ist in einem Gelenk 30 ein Ausstellelement 31 der Ausstelleinrichtung schwenkbar angelenkt. Das einen zweiten Schwenk-Ausstellhebel bildende Ausstellelement 31 ist an seinem anderen Ende in einer Längsführung 32, die im Kofferraumdeckel 4 verdeckt unter der Oberfläche 8 angebracht ist, mittels eines Gleitstücks 33 verschiebbar gelagert und um dieses schwenkbar. Das Gleitstück 33 ist über das Antriebskabel 25 mit der schon beschriebenen Antriebseinrichtung 23 verbunden. Zum Anheben der Trägerleiste 6 aus der in der Fig. 5a dargestellten abgesenkten Ruhestellung wird über das Antriebskabel 25 eine Druckkraft auf das Gleitstück 33 aufgebracht (Druckkraft nach links in Fig. 5a). Das Gelenk 30 am Hinterende 15 und das Gelenk 34 am Vorderende 10 der Trägerleiste 6 werden angehoben, so daß die Trägerleiste 6 während dem Verschwenken des vorderen Schwenk-Ausstellhebels 11 und des hinteren Ausstellelements 31 aus der Vertiefung 9 des Kofferraumdeckels 4 in die Gebrauchsstellung (Fig. 5b) ausfährt. Bevorzugt ist der Schwenkwinkel des vorderen Schwenk-Ausstellhebels 11 und des hinteren Ausstellelements 31 relativ zu der Trägerleiste 6 auf 90° begrenzt, so daß in der in Fig. 5 dargestellten Gebrauchsstellung die Belastung einer an der Trägerleiste 6 angebrachten Last über den Schwenk-Ausstellhebel 11 und das hintere Ausstellelement 31, die vertikal gestellt sind und zueinander parallel ausgerichtet sind, in das Lager 12 und das Gleitstück 33 eingeleitet wird. Dabei wird eine Längsbelastung auf das Antriebskabel 25 und somit den Antriebsmotor 23 im wesentlichen vermieden.

Wenn das Lager 12, das vordere Gelenk 34, das hintere Gelenk 30 und das Gleitstück 33 in Ruhestellung auf einer Geraden 35 liegen, muß zum Einleiten der Schwenkbewegungen eine anfängliche aufwärts gerichtete Auslenkbewegung beim Aufbringen der axialen Druckkraft des Antriebskabels 25 vorgesehen sein. Diese Auslenkbewegung kann z. B. durch eine Auslenkeinrichtung erzeugt werden, die beispielsweise mittels der Kraft von Federelementen 36 und 37, die im Bereich der Gelenk 30 und 34 angreifen, wirkt. Alternativ können der Schwenk-Ausstellhebel 11 und das hintere Ausstellelement 31 in den zugehörigen Gelenken 34 bzw. 30 unter einem geringen Winkel gegenüber der Geraden 35 angestellt sein, so daß eine axiale Totpunktstellung vermieden wird.

### Bezugszeichenliste

- 1: Kraftfahrzeug
- 2: Heckscheibe
- 3: Kofferraum
- 4: Kofferraumdeckel
- 5: Trägervorrichtung
- 6: Trägerleiste
- 7: Rand
- 8: Oberfläche
- 9: Vertiefung
- 10: Vorderende
- 11: Schwenk-Ausstellhebel
- 12: Lager
- 13: Querachse
- 14: Verstärkungsblech
- 15: Hinterende
- 16: Ausstellelement
- 17: Gelenk
- 18: Führungskanal
- 19: Kreis
- 20: Kreismittelpunkt
- 21: Ringdichtung
- 22: Stützstruktur
- 23: Antriebsmotor
- 24: Getriebe
- 25: Antriebskabel
- 26: Schalter
- 27: Langloch
- 28: Blockiereinrichtung
- 30: Gelenk
- 31: Ausstellelement
- 32: Längsführung
- 33: Gleitstück
- 34: Gelenk
- 35: Gerade
- 36: Federelement
- 37: Federelement

## Patentansprüche

**1.** Trägervorrichtung für ein Fahrzeugheck eines Kraftfahrzeugs,
**dadurch gekennzeichnet,**
**daß** die im wesentlichen in Fahrzeuglängsrichtung ausgerichtete Trägervorrichtung (6) in Ruhestellung in der Oberseite (8) des Kofferraumdeckels (4) versenkt angeordnet ist und mittels einer Ausstelleinrichtung (16) aus dem Kofferraumdeckel (4) heraus in eine Gebrauchsstellung anhebbar ist.

**2.** Trägervorrichtung nach Anspruch 1,
**dadurch gekennzeichnet,**
**daß** das eine Ende (10) der Trägervorrichtung (6) an einem Schwenk-Ausstellhebel (11) schwenkbar gelagert ist und daß die Trägervorrichtung (6) durch die am anderen Ende (15) der Trägervorrichtung (6) angreifende Ausstelleinrichtung (16) aus dem Kofferraumdeckel (4) anhebbar ist.

**3.** Trägervorrichtung nach Anspruch 1 oder 2,
**dadurch gekennzeichnet,**
**daß** die Ausstelleinrichtung (16) durch Verkürzen des Abstandes zwischen dem Angriffspunkt (17) der Ausstelleinrichtung (16) an der Trägervorrichtung (6) und dem Lager (12) des Schwenk-Ausstellhebels (11) an dem Kofferraumdeckel (4) unter Anhebung des Angriffspunkts (17) die Trägervorrichtung (6) anhebt.

**4.** Trägervorrichtung nach einem der Ansprüche 1 bis 3,
**dadurch gekennzeichnet,**
**daß** sie zwei im wesentlichen in Fahrzeuglängsrichtung angeordnete, voneinander beabstandete und durch die Ausstelleinrichtung (16) anhebbare Trägerleisten (6) zum Anbringen einer Last aufweist.

**5.** Trägervorrichtung nach einem der Ansprüche 1 bis 4,
**dadurch gekennzeichnet,**
**daß** die Ausstelleinrichtung (16) im wesentlichen innen am Kofferraumdekkel (4) angeordnet ist und über die Oberfläche (8) des Kofferraumdeckels (4) ausfahrbar ist.

**6.** Trägervorrichtung nach Anspruch 4 oder 5,
**dadurch gekennzeichnet,**
**daß** die Trägerleisten (6) von den seitlichen Rändern (7) des Kofferraumdeckels (4) beabstandet angeordnet sind.

**7.** Trägervorrichtung nach einem der Ansprüche 3 bis 6,
**dadurch gekennzeichnet, daß** das Vorderende (10) der Trägervorrichtung (6) bzw. der Trägerleisten (6) mit dem Schwenk-Ausstellhebel (11) und das Hinterende (15) mit dem angetriebenen Ausstellelement (16) gekoppelt ist.

**8.** Trägervorrichtung nach einem der Ansprüche 4 bis 7,
**dadurch gekennzeichnet, daß** das bzw. die Hinterenden (15) der Trägervorrichtung (6) bzw. der Trägerleisten (6) beim Ausstellen auf einer ansteigenden, nach vorne gerichteten Bewegungsbahn geführt sind.

**9.** Trägervorrichtung nach Anspruch 8,
**dadurch gekennzeichnet, daß** der Bahnabschnitt auf einem Kreis (19) liegt.

**10.** Trägervorrichtung nach einem der Ansprüche 1 bis 9,
**dadurch gekennzeichnet, daß** die Ausstelleinrichtung ein an einer Bewegungsbahnkurve verschiebbar geführtes Ausstellelement (16) aufweist.

**11.** Trägervorrichtung nach Anspruch 10,
**dadurch gekennzeichnet, daß** das Ausstellelement (16) in einem gekrümmten Führungskanal (18) verschiebbar aufgenommen ist.

**12.** Trägervorrichtung nach Anspruch 10,
**dadurch gekennzeichnet, daß** das Ausstellelement (16) ein gebogener Stab ist, der in dem rohrförmigen Führungskanal (18) verschiebbar aufgenommen ist.

**13.** Trägervorrichtung nach Anspruch 11 oder 12,
**dadurch gekennzeichnet, daß** der rohrförmige Führungskanal (18) unterhalb der Oberseite (8) des Kofferraumdeckels (4) angeordnet ist und daß das durch die Oberseite (8) des Kofferraumdeckels (4) hinausreichende Ausstellelement (16) mittels einer Ringdichtung (21) gegenüber dem Kofferraumdeckel (4) abgedichtet ist.

**14.** Trägervorrichtung nach einem der Ansprüche 1 bis 7,
**dadurch gekennzeichnet, daß** das Ausstellelement (31) ein einerseits mit der Trägerleiste (6) schwenkbar verbundener Schwenkhebel (31) ist, der andererseits an einer Führung, insbesondere einer Linearführung (32), verschiebbar und verschwenkbar gelagert ist.

**15.** Trägervorrichtung nach einem der Ansprüche 1 bis 14,
**dadurch gekennzeichnet, daß** die Ausstelleinrichtung bzw. das Ausstellelement (16; 31) von einem Antrieb (23) antreibbar ist.

**17.** Trägervorrichtung nach einem der Ansprüche 10 bis 16,
**dadurch gekennzeichnet, daß** die Ausstelleinrichtung und der Antrieb (23) an einer Verstärkungsstruktur (22) des Kofferraumdeckels (4) gelagert sind.

**18.** Trägervorrichtung nach einem der Ansprüche 10 bis 17,
**dadurch gekennzeichnet, daß** der Antrieb ein Elektromotor (23) ist, der mittels Seil- oder Kabelverbindung (25) mit der Trägervorrichtung (6) bzw. den beiden Trägerleisten (6) verbunden ist.

**19.** Trägervorrichtung nach einem der Ansprüche 1 bis 18,
**dadurch gekennzeichnet, daß** die Ausstelleinrichtung bzw. das Ausstellelement (16) in seiner ausgestellten Gebrauchsstellung durch eine Blokkiereinrichtung (28) festgelegt ist.
